# EUROPEAN PATENT APPLICATION

(11) **EP 3 780 039 A1**
(43) Date of publication of application: **17.02.2021**
(21) Application number: 19777016.7
(22) Date of filing: 26.03.2019
(51) Int. Cl.: H01F 38/14, H01F 38/18, H02J 50/10, H02J 50/80

(54) **TRANSMISSION MODULE AND WIRELESS POWER DATA TRANSMISSION DEVICE**

(30) Priority: 29.03.2018 JP 2018064039
(71) Applicant: Panasonic Intellectual Property Management Co., Ltd., Osaka-shi, Osaka 540-6207 (JP)
(72) Inventor: MIYAMOTO, Hideaki, Osaka-shi, Osaka 540-6207 (JP); SAKATA, Tsutomu, Osaka-shi, Osaka 540-6207 (JP); MATSUMOTO, Masato, Osaka-shi, Osaka 540-6207 (JP)
(74) Representative: Grünecker Patent- und Rechtsanwälte PartG mbB
(86) International application number: PCT/JP2019/012795
(87) International publication number: WO 2019/189138

(57) **Abstract**

An object is to improve the communication quality in a system for wirelessly transmitting electric power and data. A transmission module is used as a power transmitting module or a power receiving module in a wireless power data transmission device for wirelessly transferring electric power and data between the power transmitting module and the power receiving module. The transmission module includes: a coil for transmitting or receiving electric power through magnetic field coupling; a communication electrode for transmitting or receiving signals through electric field coupling; a first conductive shield that is located between the coil and the communication electrode; and a second conductive shield that is located between the coil and the first conductive shield.

## Description

### TECHNICAL FIELD

The present disclosure relates to a transmission module and a wireless power data transmission device.

### BACKGROUND ART

Systems have been known in the art for transmitting electric power and data wirelessly, i.e., in a contactless manner. For example, Patent Document No.1 discloses a device that wirelessly transfers energy and data between two objects that rotate relative to each other on a rotation axis. The device includes two circular or arc-shaped coils for transferring energy, and two circular or arc-shaped conductors for transferring data. The two coils oppose each other while being spaced apart from each other in the axial direction of the rotation axis, and transfer energy through inductive coupling. The two conductors are arranged in a coaxial relationship with the two coils, respectively. The conductors oppose each other while being spaced apart from each other in the axial direction, and transfer data through electrical coupling. A shielding object made of a conductive material is arranged between the two coils and the two conductors.

### CITATION LIST

### PATENT LITERATURE

Patent Document No. 1: Japanese Laid-Open Patent Publication No. 2016-174149

### SUMMARY OF INVENTION

### TECHNICAL PROBLEM

The present disclosure provides a technique for improving communication quality of a system for wirelessly transferring electric power and data between two objects.

### SOLUTION TO PROBLEM

A transmission module according to one aspect of the present disclosure is used as a power transmitting module or a power receiving module in a wireless power data transmission device for wirelessly transferring electric power and data between the power transmitting module and the power receiving module. The transmission module includes: a coil for transmitting or receiving electric power through magnetic field coupling; a communication electrode for transmitting or receiving signals through electric field coupling; a first conductive shield that is located between the coil and the communication electrode; and a second conductive shield that is located between the coil and the first conductive shield.

The general and specific aspects of the present disclosure may be implemented using a device, a system, a method, an integrated circuit, a computer program or a storage medium, or any combination of devices, systems, methods, integrated circuits, computer programs and storage media.

### ADVANTAGEOUS EFFECTS OF INVENTION

According to an embodiment of the present disclosure, it is possible to improve the communication quality in a system for wirelessly transferring electric power and data between a power transmitting module and a power receiving module.

### BRIEF DESCRIPTION OF DRAWINGS

FIG. **1** is a diagram schematically showing an example of a robot arm device having a plurality of moving parts.
FIG. **2** is a diagram schematically showing a wiring configuration of a conventional robot arm device.
FIG. **3** is a diagram showing a specific example of the conventional configuration shown in FIG. **2****.**
FIG. **4** is a diagram showing an example of a robot that wirelessly transfers electric power at each joint.
FIG. **5** is a diagram showing an example of a robot arm device to which wireless power transmission is applied.
FIG. **6** is a cross-sectional view showing an example of a power transmitting module and a power receiving module of a wireless power data transmission device.
FIG. **7** is a plan view of the power transmitting module shown in FIG. **6** as viewed along an axis **A.**
FIG. **8** is a perspective view showing a configuration example of a magnetic core.
FIG. **9** is a cross-sectional view showing a configuration of a wireless power data transmission device according to an embodiment.
FIG. **10** is a plan view of the power transmitting module shown in FIG. **9** as viewed along the axis **A.**
FIG. **11** is a diagram showing, on an enlarged scale, a portion of the wireless power data transmission device shown in FIG. **9****.**
FIG. **12** is a graph showing an analysis result of the embodiment.
FIG. **13** is a diagram showing a variation of the embodiment.
FIG. **14** is a diagram showing another variation of the embodiment.
FIG. **15** is a diagram showing another example of a wireless power data transmission device.
FIG. **16** is a diagram showing another example of a wireless power data transmission device.
FIG. **17** is a block diagram showing a configuration of a system including a wireless power data transmission device.
FIG. **18A** is a diagram showing an example of an equivalent circuit of a power transmitting coil and a power receiving coil.
FIG. **18B** is a diagram showing another example of an equivalent circuit of a power transmitting coil and a power receiving coil.
FIG. **19A** shows a configuration example of a full-bridge inverter circuit.
FIG. **19B** shows a configuration example of a half-bridge inverter circuit.
FIG. **20** is a block diagram showing a configuration of a wireless power transmission system including two wireless power feeding units.
FIG. **21A** is a diagram showing a wireless power transmission system including one wireless power feeding unit.
FIG. **21B** is a diagram showing a wireless power transmission system including two wireless power feeding units.
FIG. **21C** shows a wireless power transmission system including three or more wireless power feeding units.

### DESCRIPTION OF EMBODIMENTS

### (Findings forming basis for present disclosure)

Findings forming the basis for the present disclosure will be described before describing embodiments of the present disclosure.

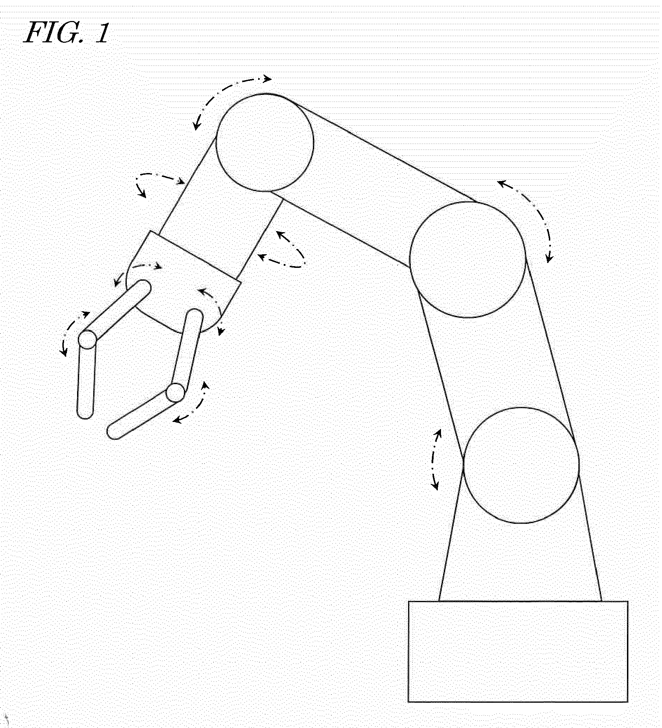

FIG. **1** is a diagram schematically showing an example of a robot arm device having a plurality of moving parts (e.g., joints). The moving parts are configured so that they can each be rotated or expanded/contracted by an actuator including an electric motor (hereinafter referred to simply as a "motor"). In order to such a device, it is required to control the motors by individually supplying electric power thereto. Power supply from the power source to a plurality of motors has been realized by connection via many cables.

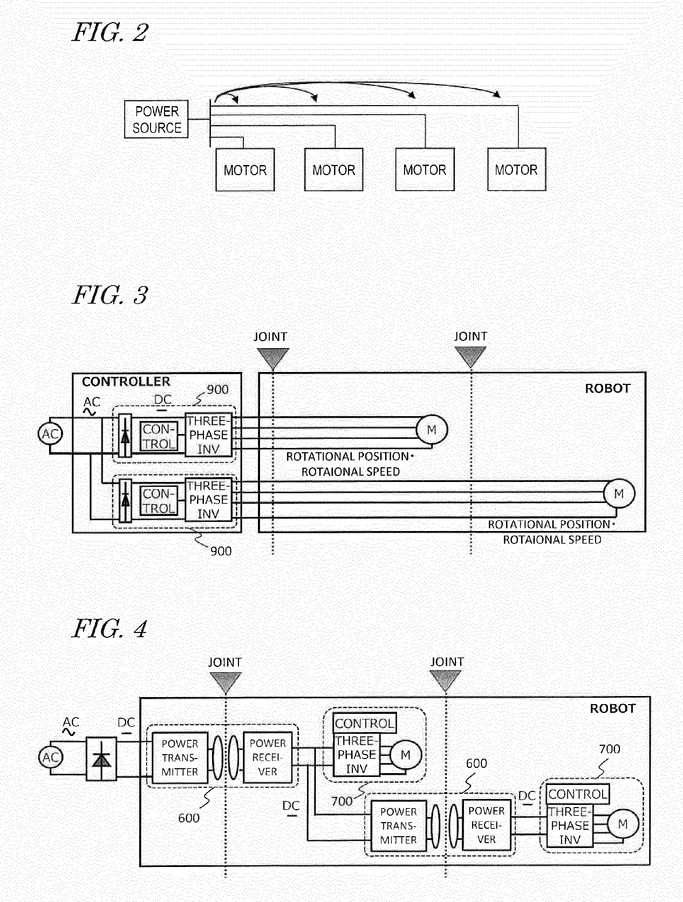

FIG. **2** is a diagram schematically showing the connection between components in such a conventional robot arm device. With the configuration shown in FIG. **2****,** electric power is supplied from the power source to a plurality of motors through wired bus connections. Each motor is controlled by a control device (or a controller).

FIG. **3** is a diagram showing a specific example of the conventional configuration shown in FIG. **2****.** The robot in this example has two joints. Each joint is driven by a servomotor **M.** Each servomotor **M** is driven by 3-phase AC power. The controller includes a number of motor driving circuits **900** in accordance with the number of motors **M** to be controlled. Each motor driving circuit **900** includes a converter, a 3-phase inverter and a control circuit. The converter converts alternating-current (AC) power from the power source to direct-current (DC) power. The 3-phase inverter converts DC power output from the converter to 3-phase AC power, and supplies the converted power to the motor **M.** The control circuit controls the 3-phase inverter so that necessary electric power is supplied to the motor **M.** The motor driving circuit **900** obtains information regarding the rotational position and the rotational speed from the motor **M,** and adjusts the voltage of each phase based on the information. With such a configuration, the action of each joint is controlled.

With such a configuration, however, there is a need to install many cables of a scale in accordance with the number of motors. Therefore, there are problems such as a high likelihood of accidents due to cables getting caught, the movable range being limited, and the replacement of parts being difficult. There are also problems such as the deterioration or breakage of cables from repeated bending. There is also a demand for installing the cables inside the arm in order to improve safety and vibration control. However, this requires many cables to be accommodated in joints, which poses a restriction to the automation of the manufacturing process. In view of this, the present inventors studied the application of a wireless power transmission technique to reduce the number of cables in moving parts of a robot arm.

FIG. **4** is a diagram showing a configuration example of a robot that wirelessly transfers electric power between joints. In this example, as opposed to the example of FIG. **3****,** the 3-phase inverter and the control circuit for driving the motor **M** are provided inside the robot rather than in an external controller. In each joint, wireless power transmission is performed via magnetic field coupling between a power transmitting coil and a power receiving coil. The robot includes, for each joint, a wireless power feeding unit and a small-sized motor. Small-sized motors **700A** and **700B** each include a motor **M,** a 3-phase inverter and a control circuit. Wireless power feeding units **600A** and **600B** each include a power transmitting circuit, a power transmitting coil, a power receiving coil and a power receiving circuit. The power transmitting circuit includes an inverter circuit. The power receiving circuit includes a rectifier circuit. The power transmitting circuit in the wireless power feeding unit **600A** on the left side of FIG. **4** is connected between the power source and the power transmitting coil to convert the supplied DC power to AC power and supply the converted power to the power transmitting coil. The power receiving circuit converts the AC power, which the power receiving coil has received from the power transmitting coil, to DC power, and outputs the converted power. The DC power output from the power receiving circuit is supplied not only to the small-sized motor **700A,** but also to the power transmitting circuit in the wireless power feeding unit **600B** provided in another joint. Thus, electric power is supplied also to the small-sized motor **700B** that drives another joint.

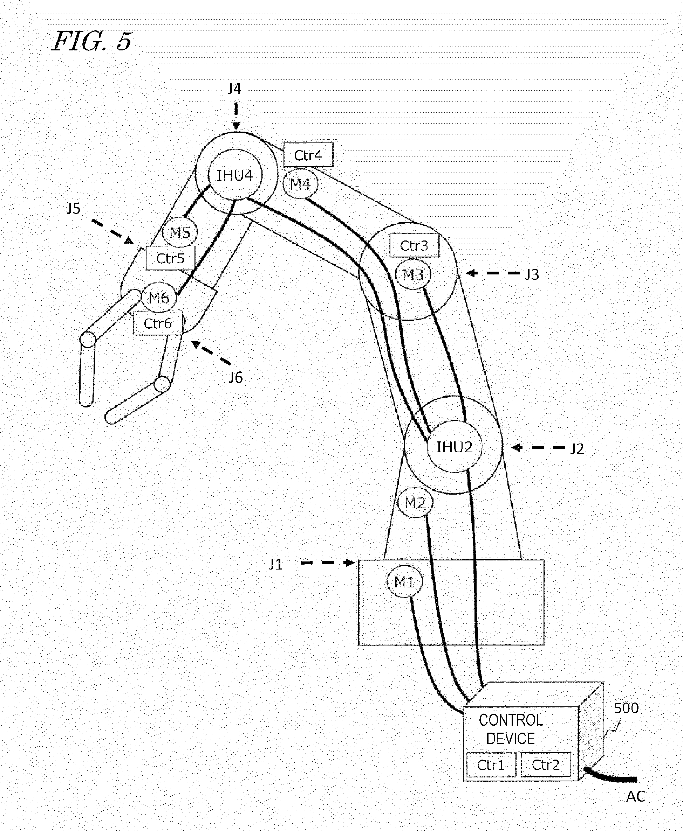

FIG. **5** is a diagram showing an example of a robot arm device to which the wireless power transmission described above is applied. This robot arm device includes joints **J1** to **J6.** Of these joints, the wireless power transmission described above is applied to the joints **J2** and **J4.** On the other hand, conventional wired power transmission is applied to the joints **J1, J3, J5** and **J6.** The robot arm device includes a plurality of motors **M1** to **M6** for driving the joints **J1** to **J6,** respectively, motor control circuits **Ctr3** to **Ctr6** for controlling the motors **M3** to **M6,** respectively, of the motors **M1** to **M6,** and two wireless power feeding units (referred to also as intelligent robot harness units: IHUs) **IHU2** and **IHU4** provided at the joints **J2** and **J4,** respectively. Motor control circuits **Ctr1** and **Ctr2** for driving the motors **M1** and **M2,** respectively, are provided in a control device **500** outside the robot.

The control device **500** supplies electric power, by wire, to the motors **M1** and **M2** and the wireless power feeding unit **IHU2.** The wireless power feeding unit **IHU2** wirelessly transfers electric power in the joint **J2** via a pair of coils. The transferred electric power is supplied to the motors **M3** and **M4,** the control circuits **Ctr3** and **Ctr4** and the wireless power feeding unit **IHU4.** The wireless power feeding unit **IHU4** also wirelessly transfers electric power in the joint **J4** via a pair of coils. The transferred electric power is supplied to the motors **M5** and **M6** and the control circuits **Ctr5** and **Ctr6.** With such a configuration, it is possible to eliminate cables for power transmission in the joints **J2** and **J4.**

In such a system, not only electric power but also data may be transferred in each wireless power feeding unit. For example, a signal for controlling each motor or a signal that is fed back from each motor may be transferred between the power transmitting module and the power receiving module in the wireless power feeding unit. Alternatively, where a camera is installed at the tip portion of the robot arm, data of an image captured by the camera may be transferred. Also, where a sensor is installed on the tip portion of the robot arm, a collection of data indicating the information obtained by the sensor may be transferred.

Such a wireless power feeding unit that transfers electric power and data simultaneously will be herein referred to as a "wireless power data transmission device". A wireless power data transmission device is required to achieve both power transmission and data transmission with high quality.

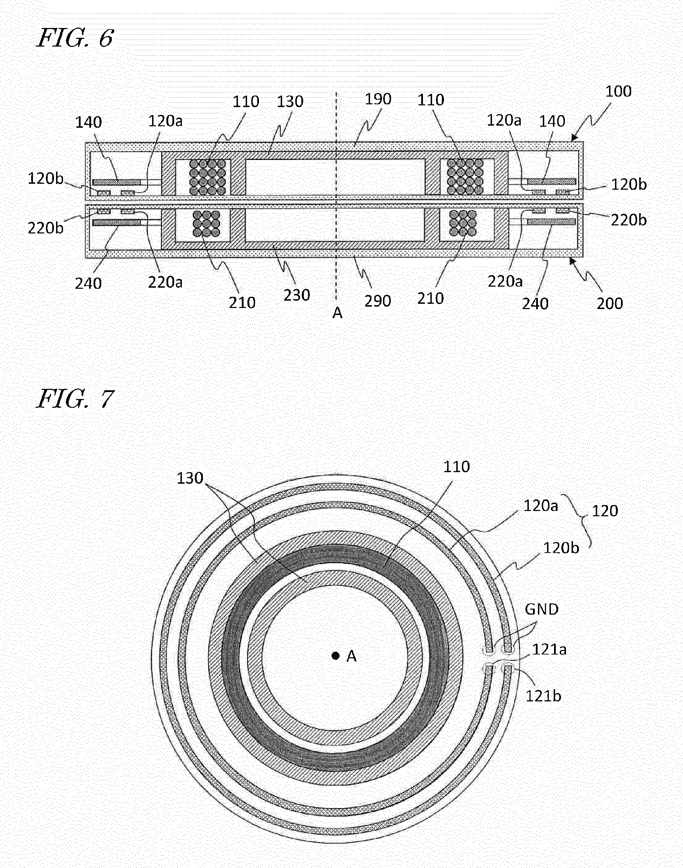

FIG. **6** is a cross-sectional view showing a configuration example of a wireless block portion of a power transmitting module **100** and a power receiving module **200** in a wireless power data transmission device. FIG. **7** is a plan view of the power transmitting module **100** shown in FIG. **6** as viewed along the axis **A.** While FIG. **7** illustrates a structure of the power transmitting module **100,** the power receiving module **200** has a similar structure. At least one of the power transmitting module **100** and the power receiving module **200** can relatively rotate on the axis **A** by means of an actuator (not shown). The actuator may be provided in either one of the power transmitting module **100** and the power receiving module **200,** or may be provided outside thereof.

The power transmitting module **100** includes a power transmitting coil **110,** a communication electrode **120,** a magnetic core **130,** a communication circuit board **140** having a communication circuit, and a housing **190** accommodating these components. The communication electrode **120** includes a first electrode **120a,** and a second electrode **120b** that is farther away from the axis **A** than the first electrode **120a.** Hereinafter, the two electrodes **120a** and **120b** may be referred to collectively as the "communication electrode **120".**

As shown in FIG. **7****,** the power transmitting coil **110** has a circular shape that is centered on the axis **A.** The two electrodes **120a** and **120b** have an arc shape (or a circular shape having slits) centered on the axis **A.** The two electrodes **120a** and **120b** are adjacent to each other with an interval therebetween. The communication electrode **120** and the power transmitting coil **110** are located on the same plane. The communication electrode **120** is located on the outer side of the power transmitting coil **110** so as to surround the power transmitting coil **110.** The power transmitting coil **110** is accommodated in the magnetic core **130.**

With the configuration shown in FIGS. **6** and **7****,** relative to the axis **A,** the power transmitting coil **210** and the power receiving coil **220** are arranged on the radially inner side, and the communication electrodes **120** and **220** are arranged on the radially outer side. The present disclosure is not limited to such a configuration, and the arrangement of the pair of the power transmitting coil **210** and the power receiving coil **210** and the communication electrodes **120** and **220** may be reversed. That is, advantageous effects to be described later can be achieved also with a configuration where the communication electrodes **120** and **220** are arranged on the radially inner side and the power transmitting coil **120** and the power receiving coil **220** are arranged on the radially outer side.

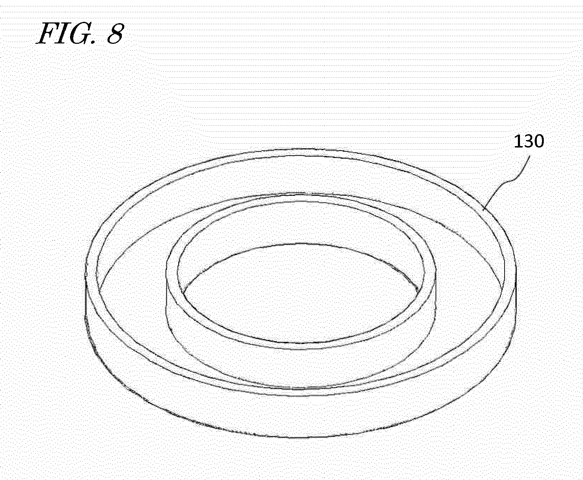

FIG. **8** is a perspective view showing a configuration example of the magnetic core **130.** The magnetic core **130** shown in FIG. **8** includes an inner circumferential wall and an outer circumferential wall, which are concentric with each other, and a bottom surface portion that connects therebetween. The magnetic core **130** does not always need to have a structure in which the bottom surface portion is connected to the inner circumferential wall and the outer circumferential wall. The magnetic core **130** is made of a magnetic material. The wound power transmitting coil **110** is arranged between the inner circumferential wall and the outer circumferential wall of the magnetic core **130.** As shown in FIG. **7****,** the magnetic core **130** is arranged so that the center thereof coincides with the axis **A.** The outer circumferential wall of the magnetic core **130** is located between the power transmitting coil **110** and the electrode **120a.** As shown in FIG. **6****,** the magnetic core **130** is arranged so that the open portion that is opposite from the bottom surface is oriented so as to oppose the power receiving module **200.**

The input/output terminal of the communication circuit is connected to one end **121a** of the electrode **120a** and one end **121b** of the electrode **120b** shown in FIG. **7****.** When transmitting signals, the communication circuit supplies two signals of opposite phases and the same amplitude to one end **121a** of the electrode **120a** and one end **121b** of the electrode **120b,** respectively. When receiving signals, it receives two signals sent from one end **121a** of the electrode **120a** and one end **121b** of the electrode **120b.** The communication circuit can demodulate the transferred signal by calculating the difference between the two signals. The other end of the electrodes **120a** and **120b** is connected to the ground (GND).

Thus, the two electrodes **120a** and **120b** function as a differential transmission line. Data transmission by the differential transmission line is not easily influenced by an electromagnetic noise. Using a differential transmission line enables data transmission at a higher speed. The communication circuit board **140** can be arranged at a position opposing the two electrodes **120a** and **120b.** The communication circuit described above is provided on the communication circuit board **140.** Note that the communication circuit board **140** may be arranged at a position that is different from the position opposing the communication electrode **120.**

The power transmitting coil **110** is connected to a power transmitting circuit (not shown). The power transmitting circuit supplies AC power to the power transmitting coil **110.** The power transmitting circuit may include, for example, an inverter circuit for converting DC power to AC power. The power transmitting circuit may include a matching circuit for impedance matching. The power transmitting circuit may also include a filter circuit for suppressing an electromagnetic noise. A circuit board with the power transmitting circuit installed thereon may be arranged at a position adjacent to the power transmitting module **100** on the side opposite to the side on which the power receiving module **200** is located, for example.

The housing **190** may be formed of a conductive material, except for a portion thereof that opposes the housing **290** of the power receiving module **200.** The housing **190** may serve a function of suppressing leakage of an electromagnetic field to the outside of the power transmitting module **100.**

The power receiving module **200** has a similar configuration to the power transmitting module **100.** The power receiving module **200** includes the power receiving coil **210,** the communication electrode **220** including two electrodes **220a** and **220b** that function as a differential transmission line, a magnetic core **230,** the communication circuit board **240,** and the housing **290** accommodating these components. The configuration of these components is similar to the configuration of the corresponding components of the power transmitting module **100.** In the present specification, the two electrodes **220a** and **220b** may be referred to collectively as "the communication electrode **220".**

The power receiving coil **210,** the two electrodes **220a** and **220b** and the magnetic core **230** have a structure similar to the structure described above with reference to FIG. **7** and FIG. **8****.** The communication circuit board **240** is connected to one end of the two electrodes **220a** and **220b,** and transmits or receives two signals of opposite phases and the same amplitude. The communication circuit board **240** may be arranged in the housing **290** as shown in FIG. **6****.**

The power receiving coil **210** is arranged so as to oppose the power transmitting coil **110.** The communication electrodes **220a** and **220b** on the power receiving side are arranged so as to oppose the communication electrodes **120a** and **120b,** respectively, on the power transmitting side. The power transmitting coil **110** and the power receiving coil **210** transfer electric power through magnetic field coupling. The communication electrodes **120a** and **120b** and the communication electrodes **220a** and **220b** transfer data via coupling between electrodes. Data can be transferred from either one of the power transmitting module **100** and the power receiving module **200.** The power transmitting module **100** and the power receiving module **200** may each include two pairs of electrodes that function as a differential transmission line. With such a configuration, full-duplex communication can be realized in which signal transfer from the power transmitting side to the power receiving side and signal transfer from the power receiving side to the power transmitting side can be done simultaneously.

With the configuration described above, electric power and data can be simultaneously transferred wirelessly between the power transmitting module **100** and the power receiving module **200.** With the configuration described above, since a differential transmission line is used, it is possible to suppress the influence of an electromagnetic noise from the power transmission section, as compared with an embodiment in which single-end transfer is used. Therefore, it is possible to improve the communication quality of the data transmission function section.

However, according to a study by the present inventors, when the amount of electric power to be transferred is large, there is a problem in that the communication quality of the data transmission section lowers due to the influence of a strong magnetic field generated around the coil when transferring electric power. When a part of the magnetic flux generated from the power transmitting coil **110** enters the communication electrodes **120** and **220,** an electromotive force is generated through electromagnetic induction in the communication electrodes **120** and **220.** The electromotive force generates, as a noise, a voltage that is irrelevant to the signal transferred. This noise may lower the SN ratio of communication, detracting from the communication quality.

With such a system as described above using a differential transmission line, the degree of influence differs between the electrode closer to the coil and the electrode farther away from the coil. It has been found that this may make the differential voltage unbalanced and may affect the operation.

Based on the above examination, the present inventors have arrived at the configuration of an embodiment of the present disclosure to be described below.

A transmission module according to an embodiment of the present disclosure is used as a power transmitting module or a power receiving module in a wireless power data transmission device for wirelessly transferring electric power and data between the power transmitting module and the power receiving module. The transmission module includes a coil for transmitting or receiving electric power through magnetic field coupling, a communication electrode for transmitting or receiving signals through electric field coupling, a first conductive shield located between the coil and the communication electrode, and a second conductive shield located between the coil and the first conductive shield.

According to the embodiment above, there are arranged the first conductive shield located between the coil and the communication electrode and the second conductive shield located between the coil and the first conductive shield. Thus, it is possible to reduce the influence of a magnetic flux generated from the coil when transferring electric power on the signal voltage at the communication electrode, and it is possible to improve the communication quality.

The communication electrode and the coil may be arranged on the same plane. The communication electrode and the coil may be arranged on different planes. The coil and the communication electrode may be arranged so as to oppose with each other with the first and second conductive shields interposed therebetween.

The power transmitting module and the power receiving module may be configured to move relative to each other. For example, the power transmitting module and the power receiving module may be configured so as to be rotatable relative to each other. In this case, the coil and the communication electrode may each have a circular shape or an arc shape centered on the same axis. With such a configuration, even when the power transmitting module and the power receiving module are rotated relative to each other, it is possible to maintain a state where the coil and the communication electrode of the power transmitting module and the coil and the communication electrode of the power receiving module oppose each other.

In one aspect, the communication electrode is located on the outer side of the coil. In another aspect, the communication electrode is located on the inner side of the coil. A magnetic material such as the magnetic core described above may be arranged between the communication electrode and the coil.

The power transmitting module and the power receiving module may be configured to be movable relative to each other along a first direction. For example, one of the transmission modules may include a linear actuator. In this case, the coil and the communication electrode may each have a shape that extends in the first direction. For example, the coil and the communication electrode may each have a rectangular shape or an elliptical shape. The communication electrode does not need to be arranged on the outer side or the inner side of the coil, and may be arranged adjacent to the coil.

The communication electrode may include two electrodes that function as a differential transmission line. The two electrodes are connected to the communication circuit. The communication circuit supplies signals of opposite phases and the same amplitude to the two electrodes. Alternatively, the communication circuit receives and demodulates signals of opposite phases and the same amplitude sent from the two electrodes. With such a configuration, it is possible to suppress the influence of an electromagnetic noise as compared with a case where the communication electrode is a single electrode.

The transmission module may further include a magnetic core that is located around the coil. The magnetic core may be located between the coil and the second conductive shield, and there may be a gap between the magnetic core and the second conductive shield. With such a configuration, it is possible to improve the transfer efficiency of the wireless power transmission section. This is because it is possible, with the configuration described above, to suppress the lowering of the Q value of the power transmitting coil and the power receiving coil of the wireless power transmission section.

In one aspect, the electric resistivity of the second conductive shield is lower than the electric resistivity of the first conductive shield. In that case, it is possible to further suppress the lowering of the Q value of the power transmitting coil and the power receiving coil.

The transmission module may further include an actuator that moves the power transmitting module and the power receiving module relative to each other. The actuator may include at least one motor. The actuator may be provided outside of the transmission module.

The transmission module may further include a power transmitting circuit that supplies AC power to the coil. In this case, the transmission module functions as a power transmitting module. The power transmitting circuit may include an inverter circuit, for example. The inverter circuit may be connected to the power source and the coil. The inverter circuit converts the DC power output from the power source to AC power for transfer, and supplies the converted power to the coil.

The transmission module may further include a power receiving circuit that converts AC power received by the coil to another form of electric power to output the converted power. In this case, the transmission module functions as a power receiving module. The power receiving circuit may include a power conversion circuit such as a rectifier circuit, for example. The power conversion circuit is connected between the coil and the load. The power conversion circuit converts AC power received by the coil to DC power or AC power as requested by the load, and supplies the converted power to the load.

The transmission module may further include a communication circuit connected to the communication electrode. When the communication electrode includes two electrodes forming a differential transmission line, two terminals of the communication circuit are connected to the two electrodes. The communication circuit functions as at least one of a signal transmitting circuit and a signal receiving circuit. When transmitting signals, the communication circuit supplies signals of opposite phases to the two electrodes.

A wireless power data transmission device according to another aspect of the present disclosure wirelessly transfers electric power and data between a power transmitting module and a power receiving module. The wireless power data transmission device includes the power transmitting module and the power receiving module. At least one of the power transmitting module and the power receiving module may be a transmission module in any one of the aspects described above.

The power transmitting module and the power receiving module may both be a transmission module in any one of the aspects described above. In that case, for both of the power transmitting module and the power receiving module, it is possible to reduce the influence of power transmission on communication.

In the wireless power data transmission device, the power transmitting module and the power receiving module do not need to have the same structure. For example, only the power transmitting module may include two conductive shields, and the power receiving module may include one conductive shield. Even with such an asymmetric configuration, it is possible to improve the communication quality of data transmission as compared with a conventional configuration.

The wireless power data transmission device may be used as a wireless power feeding unit in a robot arm device as shown in FIG. 1, for example. The application is not limited to a robot arm device, but the wireless power data transmission device can be applied to any device that includes a rotation mechanism or a linear motion mechanism. Moreover, the wireless power data transmission device can also be applied to a form of a device that does not include a rotation and linear motion function, in which an objective is to make functional connections non-contact connections.

The term "load" in the present specification means any device that operates based on electric power. A "load" may include a device such as a motor, a camera (imaging device), a light source, a secondary battery and an electronic circuit (e.g., a power conversion circuit or a microcontroller), for example. A device that includes a load and a circuit for controlling the load may be referred to as a "load device".

A more specific embodiment of the present disclosure will now be described. Note however that unnecessarily detailed descriptions may be omitted. For example, detailed descriptions on what are well known in the art or redundant descriptions on substantially the same configurations may be omitted. This is to prevent the following description from becoming unnecessarily redundant, to make it easier for a person of ordinary skill in the art to understand. Note that the present inventors provide the accompanying drawings and the following description in order for a person of ordinary skill in the art to sufficiently understand the present disclosure, and they are not intended to limit the subject matter set forth in the claims. In the following description, identical or similar components are denoted by the same reference signs.

### (Embodiments)

A wireless power transmission data transmission device according to an exemplary embodiment of the present disclosure will be described. The wireless power transmission data transmission device may be used as a component of an industrial robot used in a factory, a worksite, or the like, as shown in FIG. **1****,** for example. Although the wireless power data transmission device may be used also for other applications (e.g., a power supply to an electric vehicle such as an electric car, etc.), an example application to an industrial robot will be mainly described in the present specification.

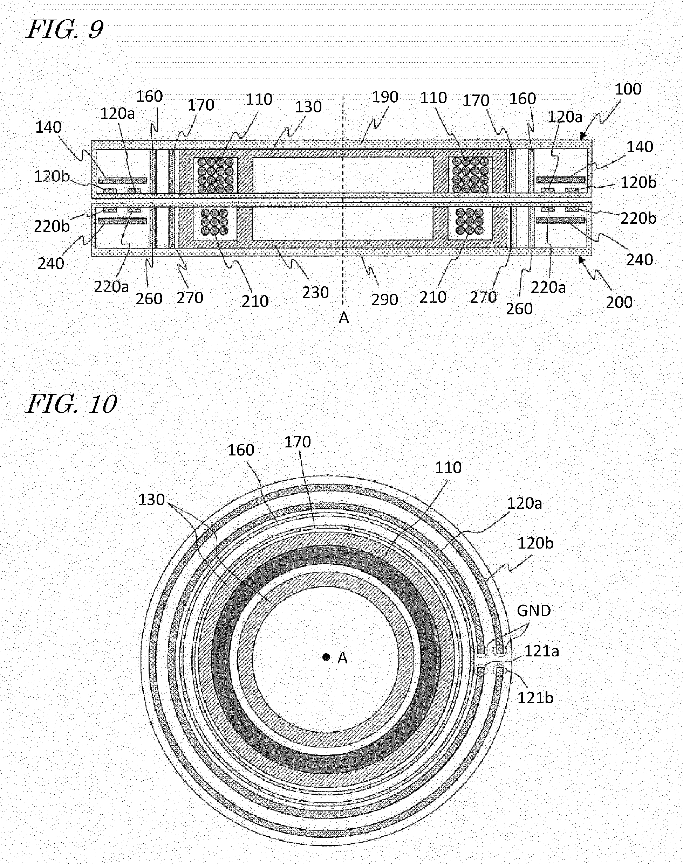

FIG. **9** is a cross-sectional view showing a configuration of the wireless power data transmission device according to the present embodiment. FIG. **10** is a plan view of the power transmitting module **100** shown in FIG. **9** as viewed along the axis **A.**

The wireless power data transmission device includes the power transmitting module **100** and the power receiving module **200.** The power transmitting module **100** includes two conductive shields **160** and **170** between the two communication electrodes **120a** and **120b** and the magnetic core **130.** Similarly, the power receiving module **200** includes two conductive shields **260** and **270** between the two communication electrodes **220a** and **220b** and the magnetic core **230.** Other than these conductive shields **160, 170, 260** and **270,** the configuration is similar to the configuration shown in FIG. **6****.**

As shown in FIG. **10****,** the conductive shields **160** and **170** have an annular shape centered on the axis **A.** Similarly, the conductive shields **260** and **270** of the power receiving module **200** have an annular shape centered on the axis **A.** The radius of the annular shape of the conductive shields **160** and **170** is larger than the radius of the outer circumferential wall of the magnetic core **130** and smaller than the radius of the inner electrode **120a.** Similarly, the radius of the annular shape of the conductive shields **260** and **270** is larger than the radius of the outer circumferential wall of the magnetic core **230** and smaller than the radius of the inner electrode **220a.** The conductive shields **160, 170, 260** and **270** may each have a shape with a slit, i.e., an arc shape, like the shape of the communication electrodes **120** and **220.**

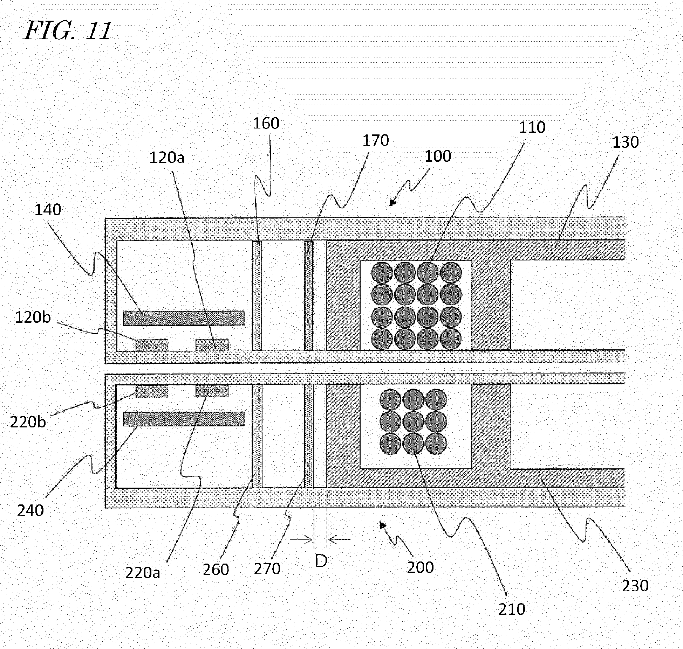

FIG. **11** is a diagram showing, on an enlarged scale, a portion of the wireless power data transmission device shown in FIG. **9****.** There is a gap between the inner electrode **120a,** the conductive shield **160,** the conductive shield **170** and the magnetic core **130** of the power transmitting module **100.** Between the conductive shield **160** and the conductive shield **170** is a space that includes no magnetic material. Similarly, there is a gap between the inner electrode **220a,** the conductive shield **260,** the conductive shield **270** and the magnetic core **230** of the power receiving module **200.** Between the conductive shield **260** and the conductive shield **270** is a space that includes no magnetic material.

Thus, two conductive members that are spaced apart from each other are arranged between the magnetic core **130** and the communication electrode **120** and between the magnetic core **230** and the communication electrode **220.** It has been found that with such a configuration, as compared with a configuration in which only one conductive member is arranged, it is possible to significantly reduce the noise included in signals transmitted/received while transferring electric power.

The present inventors performed an electromagnetic field analysis for the present embodiment and for configurations of some comparative examples to examine the advantageous effects of the present embodiment. Table 1 shows the analysis results.

**[TABLE 1]**

| | No shield | One conductive shield | | Two conductive shields | |
|---|---|---|---|---|---|
| | | Only shield 1 (Al) | Only shield 2 (Al) | Shields 1 (Al) & 2 (Al) | Shields 1 (Al) & 2 (Cu) |
| S31 [dB] | -58.2 | -73.9 | -76.2 | -90.0 | -90.4 |
| S41 [dB] | -83.3 | -91.4 | -98.8 | -93.5 | -93.5 |
| S51 [dB] | -58.5 | -74.5 | -78.1 | -96.9 | -95.7 |
| S61 [dB] | -85.0 | -96.7 | -106.8 | -94.0 | -94.0 |
| Coil Q value (normalized) | 1.0 | 0.90 | 0.64 | 0.63 | 0.75 |

In the present electromagnetic field analysis, the passing characteristic for the communication electrodes **120a, 120b, 220a** and **220b** when AC power is supplied to the power transmitting coil **110,** and the Q value of the power transmitting coil **110** and the power receiving coil **210** were calculated by electromagnetic field analysis. Similar values to sizes of various members of the actual configuration were used, and actual measured values were used for various parameters such as the electrical conductivity and the material loss. S31, S41, S51 and S61 in Table 1 each denote the ratio (S parameter) of the passing power for the communication electrodes **120a, 120b, 220a** and **220b** relative to the input electric power to the power transmitting coil **110.**

For the power transmitting module **100** and the power receiving module **200,** S31, S41, S51 and S61 were calculated for a case where no conductive shield is arranged, a case where only one conductive shield is arranged, and a case where two conductive shields are arranged. Herein, for when only one conductive shield is arranged, two cases were examined, i.e., a case where only the outer conductive shield **160, 260** (referred to as "Shield 1") is arranged and a case where only the inner conductive shield **170, 270** (referred to as "Shield 2") is arranged. In these examples, aluminum (Al) was selected as the material of Shield 1 and Shield 2. For a case where two conductive shields are arranged, two cases were examined, i.e., a case where Shields 1 and 2 are made of aluminum and a case where Shield 1 on the outer side is made of aluminum and Shield 2 on the inner side is made of copper (Cu). The electrical conductivity of copper is higher than the electrical conductivity of aluminum.

The value of S31, S41, S51 and S61 being smaller means that the influence of a magnetic flux generated from the power transmitting coil **110** on the communication electrode is smaller. Since the communication electrodes **120** and **220** of the present embodiment are each a differential transmission line, it is preferred that the values of S31 and S41 are close to each other and the values of S51 and S61 are close to each other.

It can be seen that as shown in Table 1, in each module, it is possible to suppress the passing strength and improve the communication quality only by arranging one conductive shield. Particularly, as compared with the passing strength (S41 and S61) for the communication electrodes **120b** and **220b** farther away from the coils **110** and **210,** the reduction effect is low for the passing strength (S31 and S51) for the communication electrodes **120a** and **220a** closer to the coils **110** and **210,** and there is an imbalance of the noise-superimposed passing characteristic for the communication electrodes.

In each module, by arranging two conductive shields, it is possible to reduce the passing strength (S31 and S51) for the communication electrodes **120a** and **220a** closer to the coils **110** and **210.** On the other hand, the passing strength (S41 and S61) for the communication electrodes **120b** and **220b** farther away from the coils **110** and **210** is substantially unchanged from when there is one conductive shield. As a result, the values of S31 and S41 become generally equal to each other and the values of S51 and S61 become generally equal to each other, and it is possible to suppress the imbalance of the noise-superimposed passing characteristic for the communication electrodes.

Thus, it was found that in each module, it is possible to reduce the noise caused by the power transmission section that is superimposed on communication signals by using a configuration in which two conductive shields are arranged between the communication electrode and the magnetic core.

From the comparison between a case where Shield 2 on the inner side is made of aluminum and a case where it is made of copper, it was found that it is possible to suppress the lowering of the Q value of a coil for power transmission by making Shield 2 using a material of a low electric resistivity. Shield 2 on the inner side is not limited to copper and may be made of a material having a lower resistivity than the electric resistivity of an aluminum alloy. With such a configuration, it is possible to realize both the noise suppressing effect and the effect of suppressing the lowering of the Q value.

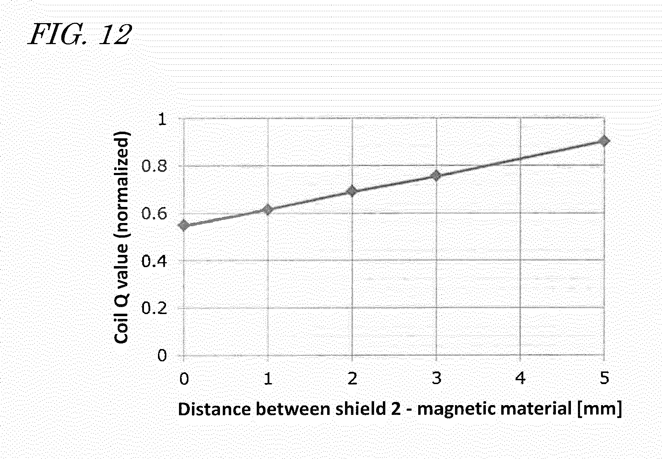

The present inventors further analyzed the change in the Q value when changing the distance **D** between the inner shields **170** and **270** (Shield 2) and the magnetic cores **130** and **230** (magnetic material) shown in FIG. **11** in the configuration where two conductive shields are arranged in each module. FIG. **12** is a graph showing the analysis result. It was confirmed that the lowering of the Q value of the coil is better suppressed by providing a gap between Shield 2 and the magnetic material and further increasing the distance **D.**

As described above, according to the present embodiment, two conductive shields **160** and **170** are arranged between the power transmitting coil **110** and the communication electrode **120,** and two conductive shields **260** and **270** are arranged between the power receiving coil **210** and the communication electrode **220.** The magnetic cores **130** and **230** are arranged around the coils **110** and **210,** respectively. There is a gap between the magnetic core **130** and the conductive shield **170** and between the magnetic core **230** and the conductive shield 270. At least a portion of this gap may be filled with a dielectric having an arbitrary dielectric characteristic.

With such a configuration, it is possible not only to suppress the intensity of the noise superimposed by the power transmission section on the electrodes **120a** and **120b** and the electrodes **220a** and **220b,** each forming a differential transmission line, but also to suppress the imbalance of the intensity of the noise superimposed on the electrodes. Therefore, it is possible to improve the communication quality for data transmission under circumstances where electric power is being transferred in the vicinity thereof. The electric resistivity of the conductive shield **170** may be set to a value lower than the electric resistivity of the conductive shield **160.** Similarly, the electric resistivity of the conductive shield **270** may be set to a value lower than the electric resistivity of the conductive shield **260.** With such a configuration, it is possible to improve the power transmission efficiency between the coils **110** and **210.**

In order to realize the advantageous effects described above, the number of conductive shields for each of the power transmitting module **100** and the power receiving module **200** is not limited to two, but it may be three or more. The advantageous effects described above can be realized as long as two or more conductive shields are provided in each module.

In the embodiment described above, the power transmitting module **100** and the power receiving module **200** both have two conductive shields. The improving effect can be realized also when only one of the power transmitting module **100** and the power receiving module **200** has two conductive shields.

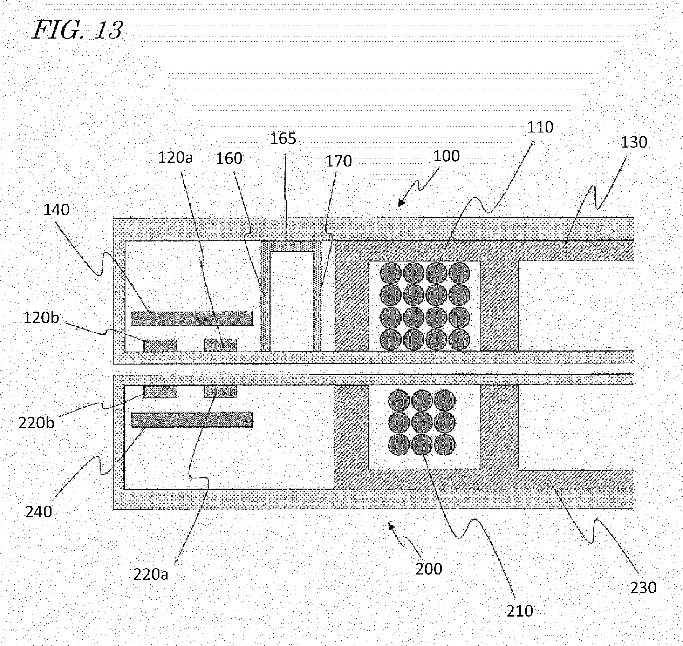

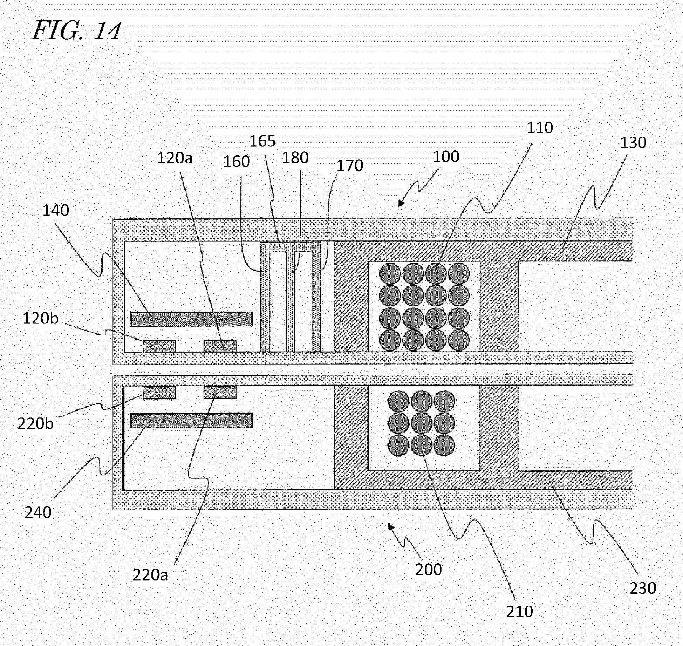

Regarding two conductive shields, it is sufficient that two or more conductive members are arranged with a gap in the space between the power transmitting coil **110** or the power receiving coil **210** and the communication electrode **120** or **220.** These conductive members do not always need to be in a plate shape, but may have any shape. These conductive members do not need to be separated from each other. For example, as shown in FIG. **13****,** the conductive shields **160** and **170** may be connected together by a conductive connecting portion **165.** In the example of FIG. **13****,** the cross section of the first conductive shield **160,** the second conductive shield **170** and the connecting portion **165** taken along a plane that includes the axis of the power transmitting coil **110** has a U-shape. Herein, "U-shape" means to include two linear portions that are generally parallel to each other, and another linear portion that connects together end portions of the two linear portions. Alternatively, three conductive shields **160, 170** and **180** may be connected together by the connecting portion **165,** as shown in FIG. **14****.** In the example of FIG. **14****,** the cross section of the conductive shields **160, 170** and **180** and the connecting portion **165** taken along a plane that includes the axis of the power transmitting coil **110** has an E-letter shape.

In the example of FIG. **13** and FIG. **14****,** only the power transmitting module **100** includes a plurality of conductive shields, and the power receiving module **200** does includes no conductive shield. The power receiving module **200** may include a conductive shield as shown in FIG. **13** or FIG. **14****.**

Each conductive shield may be formed of a metal such as copper or aluminum, for example. In addition, the following configurations may be used as a conductive shield or as an alternative thereof.
- a configuration where a conductive paint (silver paint, copper paint, etc.) is applied on a side wall formed of an electric insulator
- a configuration where a conductive tape (a copper tape, aluminum tape, etc.) is attached to a side wall formed of an electric insulator
- a conductive plastic (a material obtained by kneading a plastic with a metal filler)

Any of these can realize functions equivalent to those of a conductive shield described above. These configurations will be referred to collectively as "conductive shield".

Each conductive shield of the present embodiment has a ring-shaped structure along the power transmitting coil or the power receiving coil and the communication electrode. Each conductive shield may have a structure with a gap like a C-letter shape (i.e., an arc shape), as does each communication electrode. Also in that case, it is possible to reduce energy loss due to the generation of eddy current. The shield may have a polygonal or elliptical shape, for example. The shield may be formed by joining a plurality of metal plates. Moreover, each conductive shield may have one or more holes or slits. With such a configuration, it is possible to reduce energy loss due to the generation of eddy current.

In the present embodiment, the power transmitting coil or the power receiving coil and the communication electrode have an annular structure, and they are both rotatable relative to each other with the same axis as the rotation axis. The communication electrodes are arranged on the outer side of the power transmitting coil and the power receiving coil in the radial direction of a circle that is centered on the rotation axis. The structure is not limited to such a structure, and the communication electrodes may be arranged on the inner side of the power transmitting coil and the power receiving coil, for example. If a shielding member is arranged between the coil and the communication electrode, it is possible to suppress mutual interference.

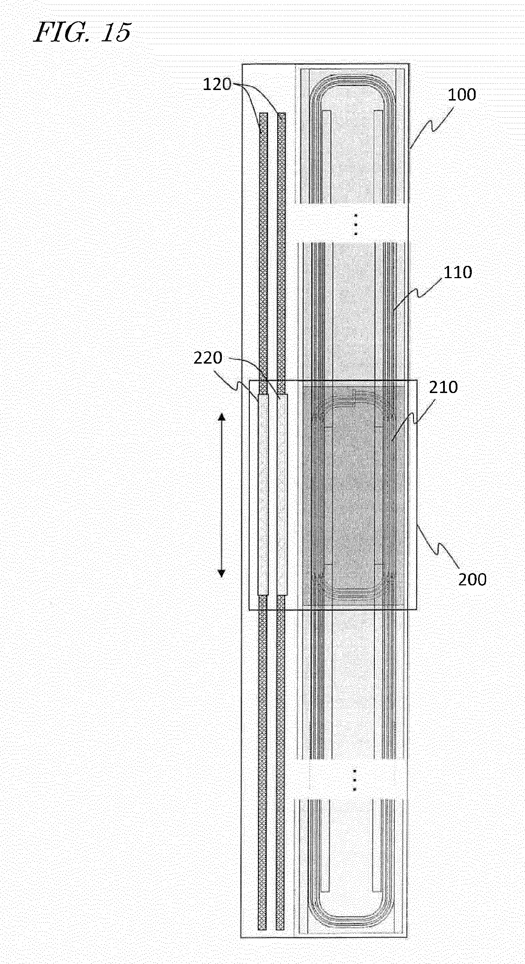

Moreover, each coil and each communication electrode may be shaped without the precondition that they rotate. For example, as shown in FIG. **15****,** each coil and each communication electrode may have a rectangular or oblong circular (elliptical) structure extending in the first direction (the longitudinal direction in FIG. **15**). In that case, the power transmitting coil **110** and the communication electrode **120** and the power receiving coil **210** and the communication electrode **220** may be configured so that they can move relative to each other in the first direction by means of an actuator. With the configuration shown in FIG. **15****,** the power receiving coil **210** and the communication electrode **220** of the power receiving module **200** are smaller than the power transmitting coil **110** and the communication electrode **120** of the power transmitting module **100.** Even if the power receiving module **200** moves relative to the power transmitting module **100,** the state in which they oppose each other is maintained. Thus, electric power and data can be transferred while moving.

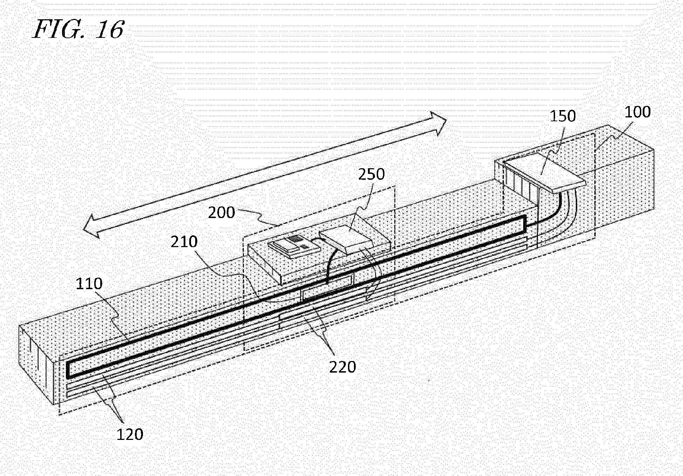

FIG. **16** is a diagram showing another example of a wireless power data transmission device. In this example, the power transmitting module **100** includes the control device **150,** and the power receiving module **200** includes the control device **250.** The control device **150** supplies AC power for power transmission to the power transmitting coil **110,** and supplies AC power for signal transfer to the communication electrode **120.** The control device **250** of the power receiving module **200** converts AC power received by the power receiving coil **210** from the power transmitting coil **210** to another form of electric power to supply the converted power to a load device such as a motor, and demodulates signals sent from the communication electrode **220.** The communication electrode 120 is arranged adjacent to the power transmitting coil **110,** and the communication electrode **220** is arranged adjacent to the power receiving coil **210.** The power receiving module **200** translates relative to the power transmitting module **100** by means of a linear motion mechanism such as a linear actuator.

In the embodiments described above, each of the communication electrodes **120** and **220** includes two electrodes that function as a differential transmission line. Each of the communication electrodes **120** and **220** may include only one electrode. Even in that case, it is possible to realize the noise reduction effect from the provision of the two conductive shields described above.

Next, the configuration of a system including the wireless power data transmission device of the present embodiment will be described in greater detail.

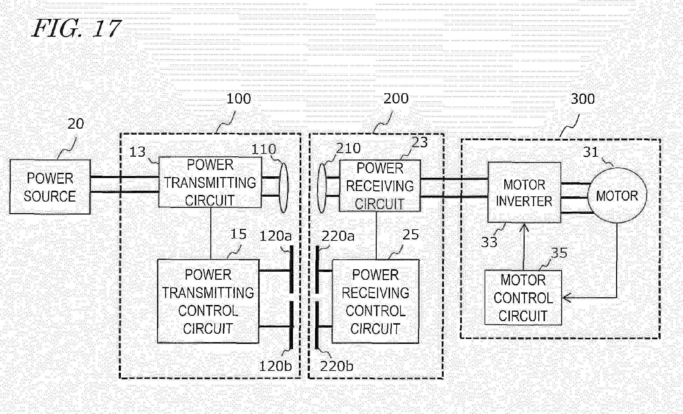

FIG. **17** is a block diagram showing a configuration of a system including a wireless power data transmission device. The present system includes the power source **20,** the power transmitting module **100,** the power receiving module **200** and a load **300.** The load **300** in this example includes a motor **31,** a motor inverter **33** and the motor control circuit **35.** The load **300** is not limited to a device including the motor **31,** but may be any device that operates based on electric power such as a battery, a lighting device and an image sensor, for example. The load **300** may be a power storage device for storing electric power such as a secondary battery or a power storage capacitor. The load **300** may include an actuator including the motor **31** that moves (e.g., rotates or linearly moves) the power transmitting module **100** and the power receiving module **200** relative to each other.

The power transmitting module **100** includes the power transmitting coil **110,** the communication electrode **120** (the electrodes **120a** and **120b**), the power transmitting circuit **13** and the power transmitting control circuit **15.** The power transmitting circuit **13** is connected between the power source **20** and the power transmitting coil **110,** and converts DC power output from the power source **20** to AC power to output the converted power. The power transmitting coil **110** sends out the AC power output from the power transmitting circuit **13** into the space. The power transmitting control circuit **15** may be an integrated circuit including a microcontroller unit (MCU, hereinafter referred to also as a "microcomputer") and a gate driver circuit, for example. The power transmitting control circuit **15** controls the frequency and the voltage of the AC power output from the power transmitting circuit **13** by switching between the conductive and non-conductive states of a plurality of switching elements included in the power transmitting circuit **13.** The power transmitting control circuit **15** is connected to the electrodes **120a** and **120b,** and also transmits/receives signals via the electrodes **120a** and **120b.**

The power receiving module **200** includes the power receiving coil **210,** the communication electrode **220** (the electrodes **220a** and **220b),** the power receiving circuit **23** and a power receiving control circuit **125.** The power receiving coil **210** electromagnetically couples to the power transmitting coil **110** to receive at least a portion of the power transmitted from the power transmitting coil **110.** The power receiving circuit **23** includes a rectifier circuit that convers the AC power output from the power receiving coil **210** to DC power, for example, and outputs the converted power. The power receiving control circuit **25** is connected to the electrodes **220a** and **220b,** and also transmits/receives signals via the electrodes **220a** and **220b.**

The load **300** includes the motor **31,** the motor inverter **33** and the motor control circuit **35.** The motor **31** in this example is a servo motor that is driven by three-phase alternating current, but may be a motor of another type. The motor inverter **33** is a circuit for driving the motor **31** and includes a three-phase inverter circuit. The motor control circuit **35** is a circuit such as an MCU for controlling the motor inverter **33.** The motor control circuit **35** causes the motor inverter **33** to output desired three-phase AC power by switching between conductive and non-conductive states of a plurality of switching elements included in the motor inverter **33.**

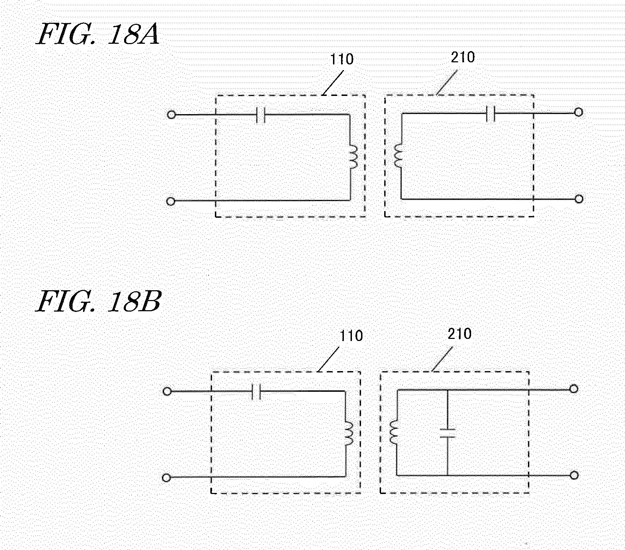

FIG. **18A** is a diagram showing an example of an equivalent circuit of the power transmitting coil **110** and the power receiving coil **210.** As shown in the figure, each coil functions as a resonance circuit having an inductance component and a capacitance component. It is possible to transfer electric power with a high efficiency by setting the resonance frequencies of two coils opposing each other to values close to each other. AC power is supplied to the power transmitting coil **110** from the power transmitting circuit **13.** Electric power is transferred to the power receiving coil **210** by the magnetic field generated from the power transmitting coil **110** by this AC power. In this example, the power transmitting coil **110** and the power receiving coil **210** both function as a series resonance circuit.

FIG. **18B** is a diagram showing another example of an equivalent circuit of the power transmitting coil **110** and the power receiving coil **210.** In this example, the power transmitting coil **110** functions as a series resonance circuit, and the power receiving coil **210** functions as a parallel resonance circuit. In addition, an embodiment in which the power transmitting coil **110** forms a parallel resonance circuit is also possible.

Each coil may be, for example, a planar coil or a laminated coil formed on a circuit board, or may be a winding coil using a litz wire or a twisted wire formed of a material such as copper or aluminum. Each capacitance component in a resonance circuit may be realized by a parasitic capacitance of each coil, or a capacitor having a chip shape or a lead shape, for example, may be provided separately.

The resonance frequencies f0 of the resonance circuits are typically set so as to coincide with the transfer frequency f1 when transferring electric power. The resonance frequencies f0 of the resonance circuits do not need to strictly coincide with the transfer frequency f1. The resonance frequency f0 may be set to a value within the range of about 50% to 150% of the transfer frequency f1, for example. The power transmission frequency f1 may be set to 50 Hz to 300 GHz, for example, to 20 kHz to 10 GHz in an example, to 20 kHz to 20 MHz in another example, and to 80 kHz to 14 MHz in yet another example.

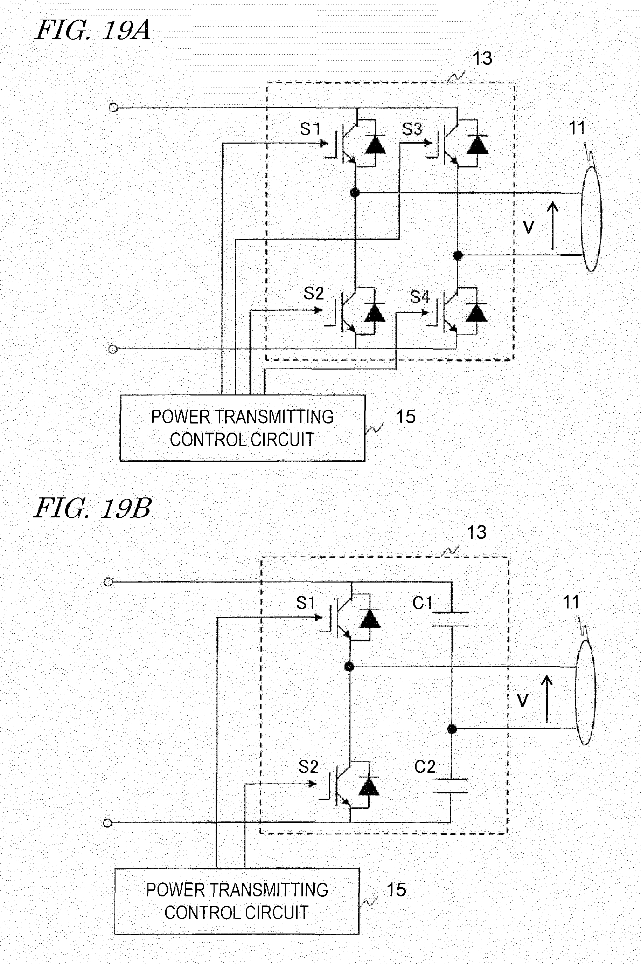

FIG. **19A** and FIG. **19B** are diagrams each showing a configuration example of the power transmitting circuit **13.** FIG. **19A** shows a configuration example of a full-bridge inverter circuit. In this example, the power transmitting control circuit **15** converts the input DC power to AC power that has desired frequency f1 and voltage V (effective value) by controlling ON/OFF of four switching elements **S1** to **S4** included in the power transmitting circuit **13.** In order to realize this control, the power transmitting control circuit **15** may include a gate driver circuit that supplies control signals to the switching elements. FIG. **19B** shows a configuration example of a half-bridge inverter circuit. In this example, the power transmitting control circuit **15** converts the input DC power to AC power having desired frequency f1 and voltage V (effective value) by controlling ON/OFF of two switching elements **S1** and **S2** included in the power transmitting circuit **13.** The power transmitting circuit **13** may have a structure difference from the configuration shown in FIG. **19A** and FIG. **19B****.**

The power transmitting control circuit **15,** the power receiving control circuit **25** and the motor control circuit **35** may be realized by a circuit including a processor and a memory, such as a microcontroller unit (MCU), for example. Various controls can be performed by executing a computer program stored in the memory. The power transmitting control circuit **15,** the power receiving control circuit **25** and the motor control circuit **35** may be implemented by dedicated hardware that is configured to perform the operation of the present embodiment. The power transmitting control circuit **15** and the power receiving control circuit **25** function also as communication circuits. The power transmitting control circuit **15** and the power receiving control circuit **25** can transfer signals or data to each other via the communication electrodes **120** and **220.**

The motor **31** may be a motor that is driven by 3-phase alternating current, such as a permanent magnet synchronous motor or an induction motor, for example, but it is not limited thereto. The motor **31** may be a motor of another type such as a DC motor. In that case, a motor driving circuit in accordance with the structure of the motor **31** is used, instead of the motor inverter **33,** which is a 3-phase inverter circuit.

The power source **20** may be any power source that outputs a DC power source. The power source **20** may be any power source such as a commercial power source, a primary battery, a secondary battery, a solar battery, a fuel battery, a USB (Universal Serial Bus) power source, a high-capacity capacitor (e.g., an electric double layer capacitor), a voltage converter connected to a commercial power source, for example.

### (Other embodiments)

A wireless power transmission system according to another embodiment of the present disclosure includes a plurality of wireless power feeding units and a plurality of loads. The wireless power feeding units are connected in series, and each supply electric power to one or more loads connected thereto.

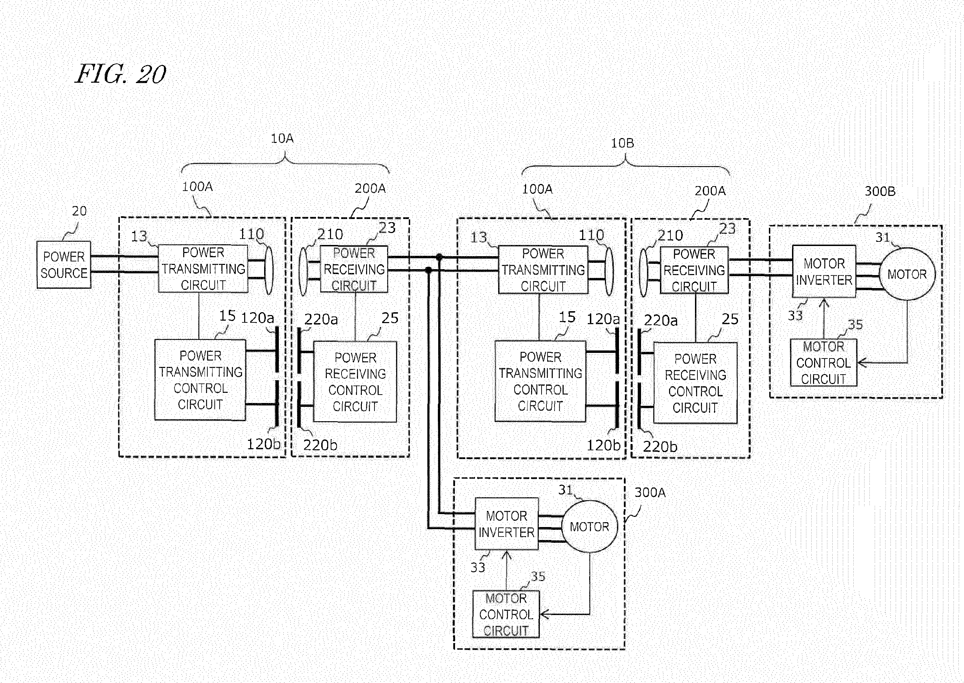

FIG. **20** is a block diagram showing a configuration of a wireless power transmission system including two wireless power feeding units. This wireless power transmission system includes two wireless power feeding units **10A** and **10B** and two loads **300A** and **300B.** The number of wireless power feeding units and the number of loads are not limited to two but may be three or more.

Each of the power transmitting modules **100A and 100B** includes similar elements to the power transmitting module **100** of the embodiment described above. Each of the power receiving modules **200A** and **200B** includes similar elements to the power receiving module **200** of the embodiment described above. The loads **300A** and **300B** receive electric power from the power receiving modules **200A** and **200B,** respectively.

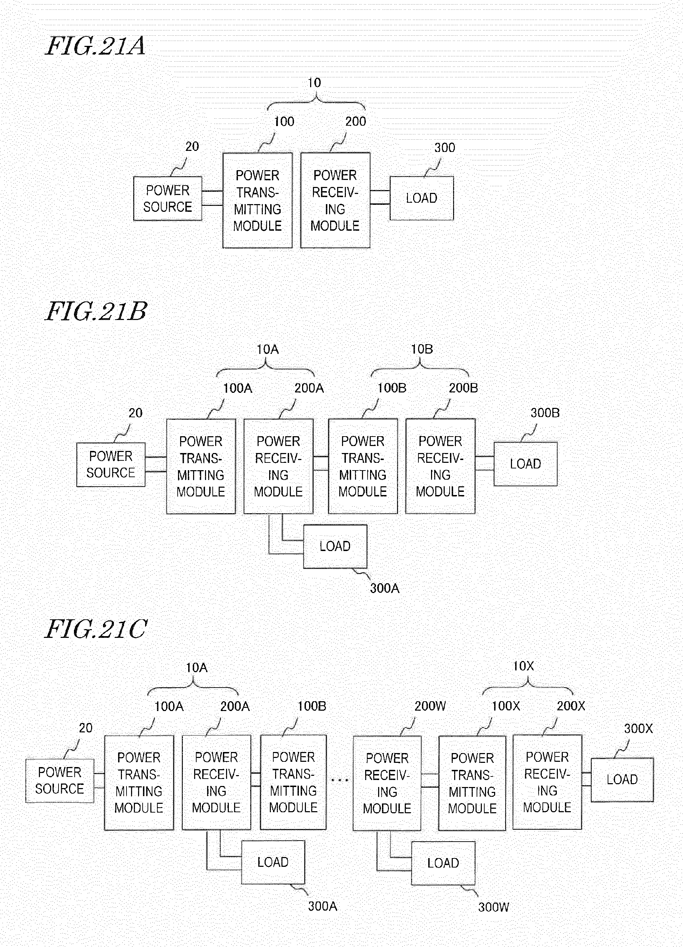

FIG. **21A** to FIG. **21C** are diagrams each schematically showing a configuration type of the wireless power transmission system of the present disclosure. FIG. **21A** shows a wireless power transmission system including one wireless power feeding unit **10.** FIG. **21B** shows a wireless power transmission system including two wireless power feeding units **10A** and **10B** provided between the power source **20** and the load **300B** at the end. FIG. **21C** shows a wireless power transmission system including three or more wireless power feeding units **10A** to **10X** provided between the power source **20** and a load device **300X** at the end. The technique of the present disclosure is applicable to any of the embodiments of FIGS. **21A** to **21C****.** With the configuration as shown in FIG. **21C****,** it is applicable to an electric-powered device such as a robot having many moving parts as described above with reference to FIG. **1****,** for example.

With the configuration of FIG. **21C****,** the configuration of the embodiment described above may be applied to all the wireless power feeding units **10A** to **10X,** or the configuration may be applied only to some of the wireless power feeding units.

### INDUSTRIAL APPLICABILITY

The technique of the present disclosure can be used in an electric-powered device such as a robot, a surveillance camera, an electric vehicle or a multi-copter used in a factory or a worksite, or the like, for example.

### REFERENCE SIGNS LIST

- 10: Wireless power feeding unit
- 13: Power transmitting circuit
- 15: Power transmitting control circuit
- 23: Power receiving circuit
- 31: Motor
- 33: Motor inverter
- 35: Motor control circuit
- 50: Power source
- 100: Power transmitting module
- 110: Power transmitting coil
- 120a, 120b: First communication electrode
- 130: Magnetic core
- 140: Communication circuit board
- 160: First conductive shield
- 170: Second conductive shield
- 180: Third conductive shield
- 190: Housing
- 200: Power receiving module
- 210: Power receiving coil
- 220a, 220b: Second communication electrode
- 230: Magnetic core
- 240: Communication circuit board
- 260: Third conductive shield
- 270: Fourth conductive shield
- 280: Fifth conductive shield
- 290: Housing
- 300: Load
- 500: Control device
- 600: Wireless power feeding unit
- 700: Small-sized motor
- 900: Motor driving circuit

## Claims

1. A transmission module used as a power transmitting module or a power receiving module in a wireless power data transmission device for wirelessly transferring electric power and data between the power transmitting module and the power receiving module, the transmission module comprising:
a coil for transmitting or receiving electric power through magnetic field coupling;
a communication electrode for transmitting or receiving signals through electric field coupling;
a first conductive shield that is located between the coil and the communication electrode; and
a second conductive shield that is located between the coil and the first conductive shield.

2. The transmission module according to claim 1, wherein:
the transmission module further comprises a conductive connecting portion that connects together the first conductive shield and the second conductive shield; and
a cross section of the first conductive shield, the second conductive shield and the connecting portion taken along a plane that includes an axis of the coil has a U-shape.

3. The transmission module according to claim 1 or 2, wherein the communication electrode and the coil are located on the same plane.

4. The transmission module according to any one of claims 1 to 3, wherein:
the power transmitting module and the power receiving module are rotatable relative to each other; and
the coil and the communication electrode each have a circular shape or an arc shape centered on the same axis.

5. The transmission module according to claim 4, wherein the communication electrode is located on an outer side of the coil.

6. The transmission module according to any one of claims 1 to 3, wherein:
the power transmitting module and the power receiving module are movable relative to each other along a first direction; and
the coil and the communication electrode each have a shape that extends in the first direction.

7. The transmission module according to claim 6, wherein the coil and the communication electrode each have a rectangular shape or an elliptical shape.

8. The transmission module according to any one of claims 1 to 6, wherein the communication electrode includes two electrodes that function as a differential transmission line.

9. The transmission module according to claim 8, wherein:
the power transmitting module and the power receiving module are rotatable relative to each other;
the coil and the communication electrode each have a circular shape or an arc shape centered on the same axis; and
the communication electrode includes a first electrode and a second electrode that is farther away from the axis than the first electrode.

10. The transmission module according to any one of claims 1 to 7, wherein:
the transmission module further comprises a magnetic core that is located around the coil;
the magnetic core is located between the coil and the second conductive shield; and
there is a gap between the magnetic core and the second conductive shield.

11. The transmission module according to claim 10, wherein between the first conductive shield and the second conductive shield is a space that includes no magnetic material.

12. The transmission module according to any one of claims 1 to 11, wherein an electric resistivity of the second conductive shield is lower than an electric resistivity of the first conductive shield.

13. The transmission module according to any one of claims 1 to 12, further comprising an actuator that moves the power transmitting module and the power receiving module relative to each other.

14. The transmission module according to any one of claims 1 to 13, wherein:
the transmission module is the power transmitting module; and
the transmission module further comprises a power transmitting circuit that supplies AC power to the coil.

15. The transmission module according to any one of claims 1 to 13, wherein:
the transmission module is the power receiving module; and
the transmission module further comprises a power receiving circuit that converts AC power received by the coil to another form of electric power to output the converted power.

16. The transmission module according to any one of claims 1 to 15, further comprising a communication circuit that is connected to the communication electrode.

17. The transmission module according to any one of claims 1 to 16, wherein the coil and the communication electrode oppose each other with the first and second conductive shields interposed therebetween.

18. A wireless power data transmission device for wirelessly transferring electric power and data between a power transmitting module and a power receiving module, the wireless power data transmission device comprising:
the power transmitting module; and
the power receiving module,
wherein at least one of the power transmitting module and the power receiving module is the transmission module according to any one of claims 1 to 17.
